# EUROPÄISCHE PATENTSCHRIFT

(11) **EP 2 247 490 B1**
(45) Veröffentlichungstag und Bekanntmachung des Hinweises auf die Patenterteilung: **01.11.2017**
(21) Anmeldenummer: 09703840.0
(22) Anmeldetag: 13.01.2009
(51) Int. Cl.: B62D 1/184, B60K 28/00, B62D 6/00, B62D 1/16, B62D 15/02

(54) **LENKUNGSANORDNUNG FÜR EIN FAHRZEUG MIT DREHBARER LENKHANDHABE**
STEERING ARRANGEMENT FOR A VEHICLE HAVING A ROTATABLE STEERING HANDLE
SYSTÈME DE DIRECTION POUR UN VÉHICULE AVEC UNE MANETTE DE DIRECTION ROTATIVE

(30) Priorität: 23.01.2008 DE 102008005793
(43) Veröffentlichungstag der Anmeldung: 10.11.2010
(73) Patentinhaber: ThyssenKrupp Presta Aktiengesellschaft, 9492 Eschen (LI)
(72) Erfinder: KLUKOWSKI, Christoph, FL-9487 Gamprin (LI)
(74) Vertreter: Hofmann, Ralf U.
(86) Internationale Anmeldenummer: PCT/EP2009/000136
(87) Internationale Veröffentlichungsnummer: WO 2009/092527

(56) Entgegenhaltungen:
- EP-A- 1 142 746
- EP-A- 1 733 950
- WO-A-01/92071

## Beschreibung

Die Erfindung betrifft eine Lenkungsanordnung gemäß Oberbegriff des Patentanspruchs 1.

Grundgedanke der an sich bekannten Lenkungsanordnungen mit einer Erzeugereinrichtung für zumindest ein haptisches Signal ist es, dem Fahrer des Fahrzeugs über den in seinen Händen vorhandenen Tastsinn ein Signal insbesondere ein Warnsignal zu übermitteln. Nun ist es grundsätzlich denkbar, die Erzeugereinrichtung direkt in die Lenkhandhabe bzw. das Lenkrad zu integrieren. Nachdem ein Lenkrad aber immer drehbar aufgehängt sein muss, stellen sich hier Probleme mit der Signalübertragung auf das Lenkrad. Dies kann zwar durch Schleifringe oder verdrillte Drähte oder dgl. gelöst werden, ist aber immer relativ aufwendig.

Ein anderer Ansatz haptische Signale auf ein Lenkrad zu übertragen, ist aus der DE 10 2004 062 820 A1 bekannt, in dieser Schrift wird ein wiederaufladbarer mechanischer Energiespeicher z.B. in Form eines tordierbaren elastischen Körpers vorgeschlagen, welcher mittels Reibschluss, gegebenenfalls über ein Umkehrrad oder direkt, auf die mit dem Lenkrad verbundene Lenkspindel einwirkt. Hierdurch wird zwar die Notwendigkeit der Signalübertragung mittels Schleifringen oder verdrillten Drähten auf das Lenkrad vermieden. Dennoch ist ein relativ aufwendiger Zusatzteil notwendig, um die haptischen Signale auf das Lenkrad übertragen zu können. Darüber hinaus erscheint es fraglich, ob die in dieser Schrift vorgeschlagene Übertragung mittels Reibschluss auf Dauer zuverlässig arbeitet.

Die WO 01/92071 A1 zeigt eine motorisch verstellbare Lenksäule, bei der mittels eines Feststeilsystems ein verstellbares haptisches Signal erzeugt wird. Die EP 1 733 950 A1 zeigt ebenfalls eine motorisch verstellbare Lenksäule, bei der mittels der Verstellmotoren für die Lenksäule ein Warnsignal über das Lenkrad an den Fahrer übermittelt wird. In der Lenksäule gemäß der EP 1 142 746 A2 werden Vibrationssignale direkt auf die Lenkspindel übertragen.

Aufgabe der Erfindung ist es, einen alternativen Lösungsvorschlag zu machen, wie mit einer möglichst einfachen Konstruktion ein haptisches Signal bei einer gattungsgemäßen Lenkungsanordnung auf eine Lenkhandhabe bzw. ein Lenkrad übertragen werden kann. Zur Lösung dieser Aufgabe wird eine Lenkungsanordnung gemäß Patentanspruch 1 vorgeschlagen.

Ein Grundgedanke der vorliegenden Erfindung ist es somit, die Manteleinheit, in der die Lenkspindel gelagert ist, zusätzlich zu ihrer tragenden Funktion als eine Übertragungseinrichtung zur Übertragung des von der Erzeugereinrichtung erzeugten haptischen Signals auf die Lenkspindel zu nutzen. Die Manteleinheit übernimmt dabei günstigerweise die Funktion eines Resonanzkastens, über den haptische also über den Tastsinn spürbare Signale auf die Lenkspindel und damit auch auf das Lenkrad bzw. eine anders ausgeformte Lenkhandhabe übertragen werden können. Hierzu ist bevorzugt vorgesehen, dass die den Resonanzkasten bildende Manteleinheit eine Resonanzfrequenz aufweist, die mit einer Frequenz des von der Erzeugereinrichtung erzeugbaren haptischen Signals übereinstimmt oder zumindest so nahe an der Frequenz des haptischen Signals liegt, dass die Manteleinheit in Resonanz versetzt werden kann. Grundsätzlich kann es sich bei diesen haptischen Signalen sowohl um Schwingungen bzw. Vibrationen als auch um gerichtete mechanische Kräfte oder Drehmomente handeln. Das Lenkrad bzw. die Lenkhandhabe ist dabei dasjenige Bauteil der Lenkungsanordnung, das dazu vorgesehen ist, durch Betätigung von Hand des Fahrers die Lenkbewegung auf das Fahrzeug zu übertragen. Die Manteleinheit kann dabei einerseits mit der Lenkspindel und andererseits mit der Erzeugungseinrichtung für das zumindest eine haptische Signal so in physischen Kontakt stehen, dass die von der Erzeugungseinrichtung erzeugten haptischen Signale über die Manteleinheit auf die Lenkspindel und damit für den Tastsinn des Fahrers spürbar auf das Lenkrad bzw. eine andere Lenkhandhabe übertragen werden.

Bei der Ausführung der Erfindung ist günstigerweise zu beachten, dass im Regelfall eine besonders steife Ausbildung der Lenksäule gefordert wird. Deshalb wird mit Vorzug die Erzeugereinrichtung für das haptische Signal nicht in die Befestigung der Lenksäule am Fahrzeug integriert. Eine Variante der Erfindung sieht vor, dass die Erzeugereinrichtung für das zumindest eine haptische Signal direkt an der Manteleinheit angeordnet wird.

Die Manteleinheit übernimmt, wie an sich bekannt, günstigerweise die tragende Funktion für die Lenkspindel. In diesem Zusammenhang ist somit bevorzugt vorgesehen, dass die Lenkspindel in einer Einbaustellung der Lenkungsanordnung im Fahrzeug von der Manteleinheit getragen ist. Die Lenkspindel wird günstigerweise von der Manteleinheit gegen die Schwerkraft im Fahrzeug gehalten ist. Um dies zu realisieren, kann vorgesehen sein, dass die Manteleinheit zumindest bereichsweise einen Hohlraum tunnelförmig oder röhrenförmig umschließt und die Lenkspindel durch diesen Hohlraum hindurch geführt ist. Zur Lagerung der Lenkspindel in der Manteleinheit können zumindest ein, vorzugsweise zumindest zwei Lager in oder an der Manteleinheit angeordnet sein, wobei die Lenkspindel mittels des Lagers oder der Lager in der Manteleinheit gelagert ist. Zur Befestigung der Manteleinheit am Fahrzeug ist eine sogenannte Konsoleneinheit vorgesehen, wobei die Konsoleneinheit einen Verstellmechanismus aufweist, mit dem die Manteleinheit in voneinander verschiedenen Positionen an der Konsoleneinheit und damit im Fahrzeug befestigbar ist. Ein solcher Verstellmechanismus kann dazu verwendet werden, die Position des Lenkrads an den jeweiligen Fahrer des Fahrzeugs anzupassen. Hierzu erlaubt der Verstellmechanismus günstigerweise eine Verstellung der Position der Manteleinheit in der Längsrichtung der Lenkspindel und/oder in der, bezogen auf eine Einbaustellung der Lenkungsanordnung im Fahrzeug, vertikale Richtung. Grundsätzlich ist es natürlich denkbar, nicht nur eine, sondern zwei oder mehrere Erzeugereinrichtungen an verschiedenen Stellen so anzuordnen, dass die von ihnen erzeugten haptischen Signale über die Manteleinheit in die Lenkspindel eingeleitet werden können.

Als Erzeugereinrichtung für das zumindest eine haptische Signal kommen Vibratoren oder andere Erzeuger von mechanischen Schwingungen oder Klopfsignalen in Frage. Es ist aber auch denkbar mechanische Quellen zur Erzeugung von gerichteten Signalen zu verwenden, und diese Signale dann über die Manteleinheit in die Lenkspindel einzuspeisen. Zur Erzeugung von Vibrationen bzw. mechanischen Schwingungen kann die Erzeugereinrichtung für das zumindest eine haptische Signal einen piezoelektrischen Schwinger oder eine Magnetspulenanordnung oder einen, vorzugsweise elektrischen, Motor zum Bewegen, vorzugsweise Drehen, einer Unwucht oder eines Exzenters aufweisen. Solche Erzeugereinrichtungen für Schwingungen sind beim Stand der Technik an sich bekannt und werden hier nur beispielhaft in verschiedenen Ausführungsformen erläutert werden.

Günstigerweise ist vorgesehen, dass die Lenkungsanordnung eine Regeleinrichtung zur Ansteuerung der Erzeugereinrichtung für das zumindest eine haptische Signal in Abhängigkeit eines Zustandsparameters des Fahrzeuges aufweist.

Die Erzeugereinrichtung für das zumindest eine haptische Signal ist günstigerweise dazu geeignet, vorzugsweise in Abhängigkeit einer Ansteuerung durch eine Regeleinrichtung, zumindest zwei, vorzugsweise mehrere, unterschiedliche und vom inaktiven Zustand der Erzeugereinrichtung verschiedene haptische Signale zu erzeugen, wobei bevorzugt die unterschiedlichen haptischen Signale sich in ihrer Amplitude und/oder Frequenz und/oder Dauer voneinander unterscheiden.

Weitere Einzelheiten und Merkmale bevorzugter Ausführungsbeispiele der Erfindung ergeben sich aus der nachfolgenden Figurenbeschreibung. Dabei zeigen:
- Fig. 1: eine Prinzipskizze zur Erläuterung der Erfindung,
- Fig. 2 und 3: verschiedene Ausgestaltungsformen, wie die Erzeugereinrichtung für zumindest ein haptisches Signal mit einer Manteleinheit in Verbindung stehen kann und
- Fig. 4 bis 7: verschiedene Beispiele für Erzeugereinrichtungen.

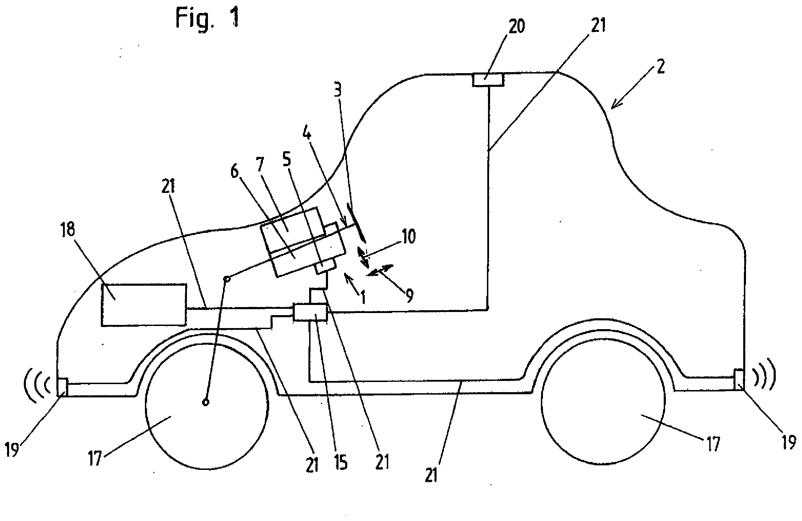

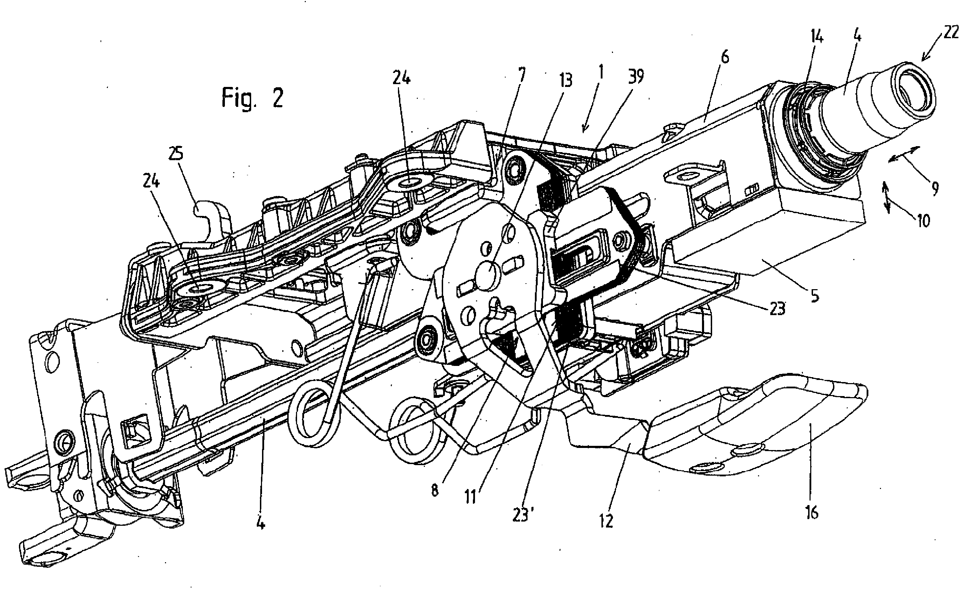

Fig. 1 zeigt zunächst stark schematisiert die Anordnung der Lenkungsanordnung 1 im Fahrzeug 2. Die Lenkungsanordnung 1 weist dabei ein mit der Lenkspindel 4 drehfest verbundenes Lenkrad 3 auf. Die Lenkspindel 4 ist wiederum drehbar in der Manteleinheit 6 gelagert. Zur Befestigung der Manteleinheit 6 ist die Konsoleneinheit 7 vorgesehen, die z.B. über Verschrauben oder Verschweißen oder andere Befestigungsmaßnahmen an der Karosserie oder einem Rahmen des Fahrzeugs befestigt sein kann. Die Übertragung der Drehbewegung der Lenkspindel 4 auf die vorderen Räder 17 erfolgt wie beim Stand der Technik bekannt und ist hier nicht im Detail dargestellt. Um das Lenkrad 3 in seiner Lage an den Fahrer anpassen zu können, ist ein, nicht in Fig. 1, aber in den Ausführungsbeispielen der Fig. 2 bis 5 dargestellter Verstellmechanismus 8 vorgesehen, der es erlaubt, die Manteleinheit 6 in verschiedenen Positionen an der Konsoleneinheit 7 zu befestigen. Günstig ist es dabei, den Verstellmechanismus 8 so auszubilden, dass das Lenkrad 3 in Längsrichtung 9 der Lenkspindel und/oder in bezogen auf die gezeigte Einbaustellung vertikaler Richtung 10 verstellbar ist.

In der in Fig. 1 schematisiert gezeigten Variante ist die Erzeugungseinrichtung 5 für das haptische Signal, wie in Fig. 2 dargestellt, direkt an der Manteleinheit 6 angeordnet. Über eine Signalleitung 21 steht die Erzeugereinrichtung 5 mit der Regeleinrichtung 15 in Verbindung. Im dargestellten Ausführungsbeispiel empfängt die Regeleinrichtung 15 über entsprechende Signalleitungen 21 verschiedene Zustandsparameter des Fahrzeuges, um diese zu überwachen und bei Abweichungen von vorgegebenen Sollwerten ein Signal zur Ansteuerung der Erzeugereinrichtung 5 zu erzeugen. Konkret dargestellt sind in diesem Zusammenhang an der Vorder- und der Rückseite des Fahrzeuges 2 Messeinrichtungen zur Bestimmung des Abstands und/oder der Relativgeschwindigkeit von sich vor oder hinter dem Fahrzeug 2 befindenden anderen Fahrzeugen oder Hindernissen. Darüber hinaus weist das in Fig. 1 dargestellte Fahrzeug 2 auch einen Positionsbestimmungssensor 20 auf. Dieser kann eine an sich bekannte GPS (Global-Positioning-System)- Antenne eines Navigationssystems sein. Darüber hinaus empfängt die Regeleinrichtung 15 über die entsprechende Signalleitung 21 auch Zustandsparameter des Verbrennungsmotors 18. Die gezeigten Sensoren sind jedoch nur Beispiele. Grundsätzlich ist es denkbar, jegliche beim Stand der Technik bekannte Überwachungen von Zustandsparametern des Fahrzeugs 2 in einer erfindungsgemäßen Ausführungsform in eine Lenkungsanordnung zu integrieren. Die jeweils gemessenen Parameter werden dabei günstigerweise mit Sollwerten oder Sollwertebereichen verglichen. Eine Abweichung der gemessenen Parameter von den Sollwerten kann dann von der Regeleinrichtung 15 dahingehend ausgewertet werden, dass die Erzeugereinrichtung 5 über die Signalleitung 21 ein Ansteuersignal erhält, woraufhin sie ein haptisches Signal auf die Manteleinheit 6 und damit über die Lenkspindel 4 auf das Lenkrad 3 überträgt. Auf diese Art und Weise können z.B. Motorparameter wie Drehzahl, Öldruck, Temperatur, verschiedene Zündparameter und dgl. überwacht und ausgewertet werden, um bei Fehlfunktionen oder anderen Abweichungen von Sollwerten ein haptisches Signal zu erzeugen. Das Gleiche gilt natürlich auch für andere Fahrzeugparameter wie Reifendruck, Füllstand des Brennstofftanks, Schließzustand der Türen und Klappen des Fahrzeugs, Funktionsfähigkeit der Beleuchtung des Fahrzeugs usw.. Darüber hinaus ist es auch möglich, den Abstand und die Relativgeschwindigkeit über die Sensoren 19 zu überwachen, um bei Gefahrensituationen entsprechend ein haptisches Signal zu erzeugen. Über den Positionsbestimmungssensor 20 und eine entsprechende Regeleinrichtung 15 ist es auch möglich, zu überwachen, dass das Fahrzeug nicht von dem vorgegebenen Weg abweicht. So kann z.B. vorgesehen sein, dass in Verbindung mit einem an sich bekannten Navigationssystem haptische Signale erzeugt werden, wenn das Fahrzeug den vorgegebenen Weg verlässt. Auf gleiche Weise kann auch verhindert werden, dass z.B. durch Einschlafen des Fahrers das Fahrzeug von der Spur bzw. der Straße abkommt, indem entsprechende haptische Signale beim Verlassen der Spur erzeugt werden. All dies sind, wie erwähnt, aber nur Beispiele.

Günstige Ausgestaltungsformen sehen vor, dass die Erzeugereinrichtung 5 für das zumindest eine haptische Signal dazu geeignet ist, vorzugsweise in Abhängigkeit einer Ansteuerung durch eine Regeleinrichtung, zumindest zwei, vorzugsweise mehrere, unterschiedliche und vom inaktiven Zustand der Erzeugereinrichtung verschiedene haptische Signale zu erzeugen. Dies ist z.B. möglich, indem die unterschiedlichen haptischen Signale sich in ihrer Amplitude und/oder Frequenz und/oder Dauer und/oder Richtung voneinander unterscheiden. Hierdurch ist es möglich, die Art, die Dauer, die Richtung und/oder die Stärke des haptischen Signals an die jeweilige Gefahrensituation anzupassen. Bei geringer Sollwertüber- oder -unterschreitung wird z.B. ein vergleichsweise schwaches oder kurzes Signal erzeugt, das mit ansteigender Gefährdungssituation entsprechend verstärkt, verlängert oder verändert wird, also in irgendeiner Form für den Benutzer deutlicher spürbar wie z.B. hektischer wird. Genauso gut ist es auch möglich, für verschiedene überwachte Parameter verschiedene haptische Signale zu erzeugen, damit der Benutzer an der Art des haptischen Signals erkennt, bei welchem der überwachten Parameter eine Abweichung vom Sollwert oder Sollwertebereich eingetreten ist.

Fig. 2 zeigt den oberen, hier für die Erfindung relevanten Teil einer erfindungsgemäßen Lenkungsanordnung 1. Die Lenkspindel 4 ist über das Lager 14 in der Manteleinheit 6 gelagert. Zur Befestigung eines Lenkrades 3 ist das Anschlussstück 22 der Lenkspindel 4 vorgesehen. Die Manteleinheit 6 ist tunnelförmig ausgebildet, und die Lenkspindel 4 durch den innen liegenden Hohlraum dieses Tunnels hindurchgeführt. Zur Befestigung der Manteleinheit 6 am Fahrzeug 2 ist die Konsoleneinheit 7 vorgesehen. Diese wird im hier gezeigten Ausführungsbeispiel über die Befestigungslöcher 24 und den Haken 25 am Fahrzeug 2 fixiert. Im gezeigten Ausführungsbeispiel ist ein Verstellmechanismus 8 vorgesehen, mittels dessen die Manteleinheit 6 in verschiedenen Positionen relativ zur Konsoleneinheit 7 an dieser befestigt werden kann. Im konkret ausgeführten Beispiel weist dieser Verstellmechanismus 8 den Klemmmechanismus 11 auf. Dieser umfasst wiederum, wie an sich bekannt, zwei ineinander greifende Lamellenpakete 23 und 23', wobei das Lamellenpaket 23 an der Manteleinheit 6 und das Lamellenpaket 23' an der Konsoleneinheit 7 fixiert ist. Über den Verbindungsbolzen 13 werden die beiden genannten Lamellenpakete 23 und 23' in einer Verriegelungsstellung so aneinander gepresst, dass die Manteleinheit 6 in dieser Stellung an der Konsoleneinheit 7 befestigt ist. Zur Veränderung dieser Stellung in Längsrichtung 9 der Lenkspindel 4 bzw. in einer, in der gezeigten Montagestellung vertikalen Richtung 10, wird der Verbindungsbolzen 13 mittels des Handbedienhebels 12 in die Endriegelungsstellung gebracht, in der die Lamellenpakete 23 und 23' nicht mehr aufeinander gepresst sind und die Manteleinheit 6 relativ zur Konsoleneinheit 7 verschoben werden kann. Zur Fixierung der neu eingestellten Position wird der Handbedienhebel 12 und damit auch der Verbindungsbolzen 13 wieder in die in Fig. 2 gezeigte Verriegelungsstellung gebracht, womit die Manteleinheit 6 wiederum in ihrer Position relativ zur Konsoleneinheit 7 an dieser befestigt ist. Dies ist an sich bekannt und muss nicht weiter im Detail ausgeführt werden. Natürlich muss der Verstellmechanismus 8 nicht zwingend einen Klemmmechanismus 11 aufweisen. Es sind auch andere Arten der Verstellung und Befestigung z.B. durch Verschrauben, durch Spindeltriebe oder dgl. denkbar. Auch mittels Motor und gegebenenfalls Getriebe betriebene Verstellvarianten zwischen Manteleinheit 6 und Konsoleneinheit 7 sind erfindungsgemäß auslegbar.

In dem Ausführungsbeispiel gemäß Fig. 2 ist die Erzeugereinrichtung 5 zur Erzeugung des haptischen Signals außen anliegend direkt an der Manteleinheit 6 angeordnet. Sobald die Erzeugereinrichtung 5 ein haptisches Signal erzeugt, wird dies zunächst auf die Manteleinheit 6 und dann über das Lager 14 auf die Lenkspindel 4 und dadurch auch auf das hier nicht dargestellte Lenkrad 3 übertragen. Die Signalleitungen 21 wie auch die Regeleinrichtung 15 sind in den Fig. 2 bis 5 nicht gezeigt, die Verschaltung kann jedoch, wie in Fig. 1 schematisch dargestellt, vorgenommen werden.

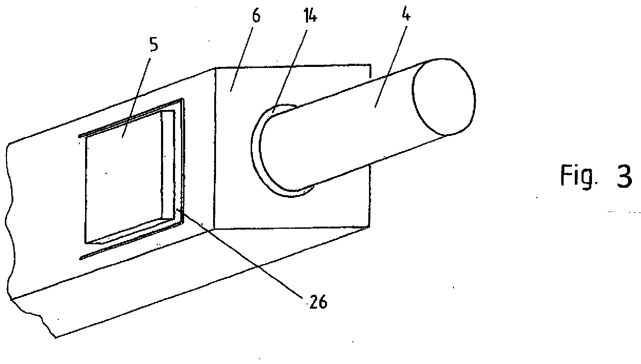

Fig. 3 zeigt schematisiert eine Variante bei der die Manteleinheit 6 eine Zunge 26 aufweist, die durch die Erzeugereinrichtung 5 in Schwingungen versetzt wird, um so ein besonders deutlich spürbares haptisches Signal erzeugen zu können. In der dargestellten Variante ist die Erzeugereinrichtung 5 direkt auf der Zunge 26 angeordnet. Dies muss aber nicht zwingend so sein. Wichtig ist vor allem, dass die Zunge 26 zwar einerseits an der Manteleinheit 6 befestigt ist, aber andererseits auch Bereiche aufweist, die relativ zur Manteleinheit schwingen können. Im gezeigten Beispiel wird die Zunge 26 durch eine bereichsweise Ausstanzung aus der Manteleinheit 6 gebildet. Es ist aber auch jede geeignete andere Art von Befestigung, wie z.B. Anschweißen oder Anschrauben, der Zunge 26 an der Manteleinheit 6 denkbar.

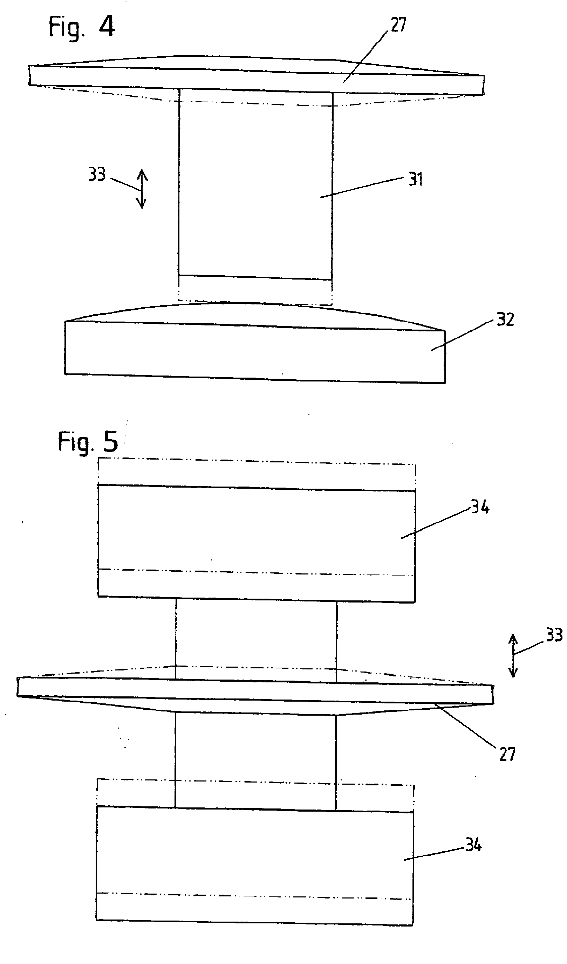

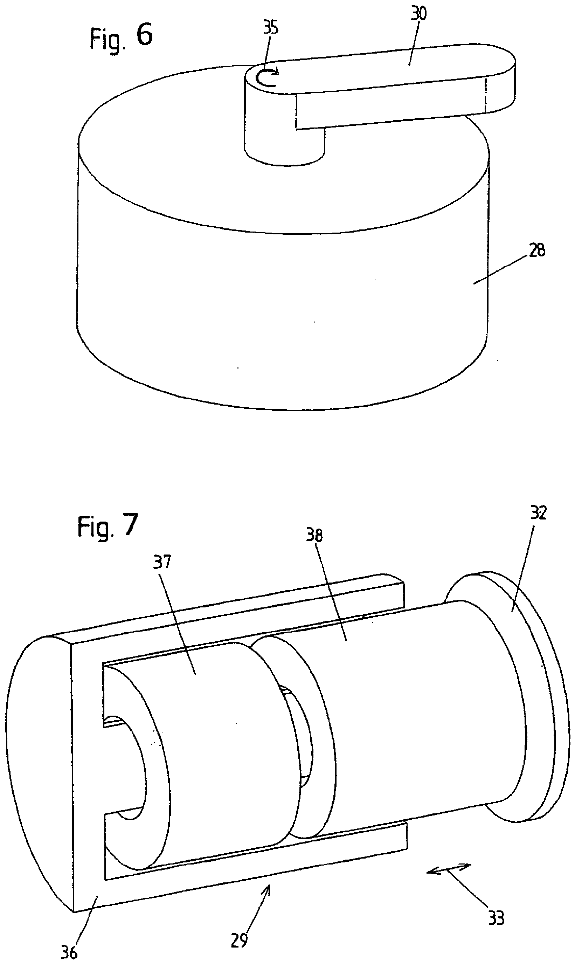

Im Folgenden werden beispielhaft verschiedene Arten von Erzeugereinrichtungen 5 für ein haptisches Signal erläutert. Fig. 4 zeigt eine Variante bei der als Quelle ein piezoelektrischer Schwinger 27 vorgesehen ist. Durch entsprechende Anregung versetzt dieser das Zwischenstück bzw. den Hammer 31 in Einfachhub- oder Schwingbewegungen 33, wodurch dieser wiederum auf den Amboss 32 schlägt, über den das so erzeugte Signal weitergeleitet wird. Der Hammer 31 kann dabei an dem piezoelektrischen Schwinger 27 fixiert sein. Die durchgezogenen und unterbrochenen Strichdarstellungen zeigen wie auch beim Ausführungsbeispiel gemäß Fig. 5 die jeweils maximal ausgelenkten Postionen der jeweiligen Bauteile 27 bzw. 31 oder 34. Fig. 5 zeigt eine Variante einer Erzeugereinrichtung 5 bei der an dem piezoelektrischen Schwinger 27 zwei Zusatzmassen 34 angeordnet sind, die gemeinsam mit dem piezoelektrischen Schwinger 27 in eine Schwingbewegung 33 versetzt werden und so das Signal verstärken. Die Übertragung der Schwingung auf ein hier nicht dargestelltes Gehäuse der Erzeugereinrichtung 5 und damit letztendlich auf die Manteleinheit 6 erfolgt über die Aufhängung des piezoelektrischen Schwingers 27. Fig. 6 zeigt ein Beispiel mit einem vorzugsweise elektrischen Motor 28. Dieser erzeugt eine Drehbewegung 35 des Exzenters 30. Durch seine Masse bzw. Unwucht erzeugt der Exzenter 30 dabei ein haptisches Signal das über den Motor 28 bzw. dessen Gehäuse weiter übertragen wird. Fig. 7 zeigt eine Magnetspulenanordnung für eine Erzeugereinrichtung 5. Auf den den magnetischen Kern bildenden Polplatten 36 sitzen eine magnetisierbare Kernspule 37 und eine magnetisierbare Tauchspule 38. Eine der Spulen ist an den Polplatten fixiert, die andere ist in Richtung der Schwingungsbewegung 33 beweglich gelagert. Durch entsprechende Polung der Spulen wird die bewegliche Spule in eine einmalige Bewegung oder in eine Schwingbewegung 33 versetzt, wodurch der Amboss 32 entsprechend mit Schlägen beaufschlagt bzw. in Schwingung versetzt wird. Das haptische Signal wird über den Amboss 32 weiter übertragen. Natürlich ist es dabei auch möglich, eine der Spulen durch einen Permanentmagneten zu ersetzen.

In den gezeigten Ausführungsbeispielen wurde die Erfindung anhand einer Lenkungsanordnung 1 für bodengebundene Kraftfahrzeuge wie z.B. PKW's und LKW's gezeigt. Natürlich können erfindungsgemäße Lenkungsanordnungen auch für Krafträder wie Motorräder, Mopeds und dgl. eingesetzt werden. Die Erfindung ist aber nicht zwingend nur auf Lenkungsanordnungen für bodengebundene Fahrzeuge beschränkt. Grundsätzlich ist es auch möglich, entsprechende Lenkungsanordnungen auch für Flugzeuge, Boote oder Schiffe einzusetzen, um nur einige Beispiele zu erwähnen.

**Legende**

| | | | |
|---|---|---|---|
| zu den Hinweisziffern: | | | |
| 1 | Lenkungsanordnung | 32 | Amboss |
| 2 | Fahrzeug | 33 | Schwingbewegung |
| 3 | Lenkrad | 34 | Zusatzmassen |
| 4 | Lenkspindel | 35 | Drehbewegung |
| 5 | Erzeugereinrichtung | 36 | Polplatten |
| 6 | Manteleinheit | 37 | Kernspule |
| 7 | Konsoleneinheit | 38 | Tauchspule |
| 8 | Verstellmechanismus | 39 | Klemmplatten |
| 9 | Längsrichtung | | |
| 10 | vertikale Richtung | | |
| 11 | Klemmmechanismus | | |
| 12 | Handbedienhebel | | |
| 13 | Verbindungsbolzen | | |
| 14 | Lager | | |
| 15 | Regeleinrichtung | | |
| 16 | Griffteil | | |
| 17 | Rad | | |
| 18 | Verbrennungsmotor | | |
| 19 | Abstandssensor | | |
| 20 | Positionsbestimmungssensor | | |
| 21 | Signalleitung | | |
| 22 | Anschlußstück | | |
| 23 | Lamellenpaket | | |
| 23' | Lamellenpaket | | |
| 24 | Befestigungsloch | | |
| 25 | Haken | | |
| 26 | Zunge | | |
| 27 | piezoelektrischer Schwinger | | |
| 28 | Motor | | |
| 29 | Magnetspulenanordnung | | |
| 30 | Exzenter | | |
| 31 | Hammer | | |

## Patentansprüche

1. Lenkungsanordnung (1) für ein Fahrzeug (2) mit einer drehbaren Lenkhandhabe, insbesondere einem Lenkrad (3), und einer damit drehfest verbundenen Lenkspindel (4) und zumindest einer Erzeugereinrichtung (5) für zumindest ein haptisches Signal, wobei die Lenkspindel (4) in einer Manteleinheit (6) der Lenkungsanordnung (1) gelagert ist, wobei die Manteleinheit (6) mit der Erzeugereinrichtung (5) für zumindest ein haptisches Signal in Verbindung steht und als eine Übertragungseinrichtung zur Übertragung des von der Erzeugereinrichtung (5) erzeugbaren haptischen Signals auf die Lenkspindel (4) zwischen der Erzeugereinrichtung (5) und der Lenkspindel (4) angeordnet ist und die Manteleinheit (6) über eine Konsoleneinheit (7) an dem Fahrzeug (2) befestigbar ist und die Konsoleneinheit (7) einen Verstellmechanismus (8) aufweist, mit dem die Manteleinheit (6) in voneinander verschiedenen Positionen an der Konsoleneinheit (7) befestigbar ist, wobei der Verstellmechanismus (8) einen Klemmmechanismus (11) aufweist, mit dem die Manteleinheit (6) in voneinander verschiedenen Positionen an der Konsoleneinheit (7) festklemmbar ist, **dadurch gekennzeichnet, dass** die Erzeugereinrichtung (5) für das zumindest eine haptische Signal direkt an der Manteleinheit (6) oder an einer Zunge (26) der Manteleinheit (6) angeordnet ist.

2. Lenkungsanordnung (1) nach Anspruch 1, **dadurch gekennzeichnet, dass** der Verstellmechanismus (8) eine Verstellung der Position der Manteleinheit (6) in einer Längsrichtung (9) der Lenkspindel (4) und/oder in einer bezogen auf eine Einbaustellung der Lenkungsanordnung (1) im Fahrzeug (2) vertikale Richtung (10) ermöglicht.

3. Lenkungsanordnung (1) nach Anspruch 1 oder 2, **dadurch gekennzeichnet, dass** die Manteleinheit (6) zumindest bereichsweise einen Hohlraum tunnelförmig oder röhrenförmig umschließt und die Lenkspindel (4) durch diesen Hohlraum hindurchgeführt ist.

4. Lenkungsanordnung (1) nach einem der Ansprüche 1 bis 3, **dadurch gekennzeichnet, dass** an oder in der Manteleinheit (6) zumindest ein, vorzugsweise zumindest zwei, Lager (14) angeordnet ist (sind), wobei die Lenkspindel (4) mittels des Lagers (14) oder der Lager (14) in der Manteleinheit (6) gelagert ist.

5. Lenkungsanordnung (1) nach einem der Ansprüche 1 bis 4, **dadurch gekennzeichnet, dass** die Erzeugereinrichtung (5) für das zumindest eine haptische Signal einen Vibrator zur Erzeugung von mechanischen Schwingungen oder Klopfsignalen aufweist.

6. Lenkungsanordnung (1) nach einem der Ansprüche 1 bis 5, **dadurch gekennzeichnet, dass** die Manteleinheit (6) eine Resonanzfrequenz aufweist, die mit einer Frequenz des von der Erzeugereinrichtung (5) erzeugbaren haptischen Signal übereinstimmt oder zumindest so nahe an der Frequenz des haptischen Signals liegt, dass die Manteleinheit (6) in Resonanz versetzbar ist.

7. Verfahren zum Betrieb einer Lenkungsanordnung (1) für ein Fahrzeug (2) nach einem der Ansprüche 1 bis 6, **dadurch gekennzeichnet, dass** von der Erzeugereinrichtung (5) zumindest ein haptisches Signal erzeugt wird und dieses haptische Signal von der Erzeugereinrichtung (5) über die Manteleinheit (6) auf die Lenkspindel (4) übertragen wird.

## Claims

1. Steering arrangement (1) for a vehicle (2) comprising a rotatable steering handle, in particular a steering wheel (3), and a steering spindle (4) connected rotationally fixedly therewith, and at least one generator device (5) for generating at least one haptic signal, wherein the steering spindle (4) is bearing supported in a jacket unit (6) of the steering arrangement (1), wherein the jacket unit (6) is connected with the generator device (5) for at least one haptic signal, and, as a transmission device for the transmission of the haptic signal generatable by the generator device (5) onto the steering spindle (4), is disposed between the generator device (5) and the steering spindle (4), and the jacket unit (6) is securable on the vehicle (2) via a console unit (7), and the console unit (7) comprises an adjustment mechanism (8) with which the jacket unit (6) is securable on the console unit (7) in positions differing from one another, wherein the adjustment mechanism (8) comprises a clamping mechanism (11) with which the jacket unit (6) can be clamped securely on the console unit (7) in positions differing from one another, **characterized in that** the generator device (5) for the at least one haptic signal is disposed directly on the jacket unit (6) or on a tongue (26) of the jacket unit (6).

2. Steering arrangement (1) according to claim 1, **characterized in that** the adjustment mechanism (8) allows an adjustment of the position of the jacket unit (6) in a longitudinal direction (9) of the steering spindle (4) and/or in a vertical direction (10) relative to an installation position of the steering arrangement (1) in the vehicle (2).

3. Steering arrangement (1) according to claim 1 or 2, **characterized in that** the jacket unit (6) encompasses at least regionally a hollow space in the form of a tunnel or tube and the steering spindle (4) is guided through this hollow space.

4. Steering arrangement (1) according to one of claims 1 to 3, **characterized in that** on or in the jacket unit (6) at least one, preferably at least two, bearings (14) is (are) disposed, wherein the steering spindle (4) is bearing supported in the jacket unit (6) by the bearing (14) or the bearings (14).

5. Steering arrangement (1) according to one of claims 1 to 4, **characterized in that** the generator device (5) for the at least one haptic signal comprises a vibrator for the generation of mechanical vibrations or knocking signals.

6. Steering arrangement (1) according to one of claims 1 to 5, **characterized in that** the jacket unit (6) has a resonance frequency which agrees with a frequency of the haptic signal generatable by the generator device (5) or is at least so close to the frequency of the haptic signal that the jacket unit (6) can be set into resonance.

7. Method for operating a steering arrangement (1) for a vehicle (2) according to one of claims 1 to 6, **characterized in that** at least one haptic signal is generated by the generator device (5) and this haptic signal is transmitted from the generator device (5) via the jacket unit (6) onto the steering spindle (4).

## Revendications

1. Système de direction (1) pour un véhicule (2) avec une manette de direction rotative, en particulier un volant (3), et une colonne de direction (4) qui y est reliée de manière solidaire en rotation et au moins un dispositif de génération (5) pour au moins un signal haptique, dans lequel la colonne de direction (4) est logée dans une unité d'enveloppe (6) du système de direction (1), dans lequel l'unité d'enveloppe (6) est en liaison avec le dispositif de génération (5) pour au moins un signal haptique et est agencée en tant que dispositif de transmission pour la transmission du signal haptique pouvant être généré par le dispositif de génération (5) à la colonne de direction (4) entre le dispositif de génération (5) et la colonne de direction (4) et l'unité d'enveloppe (6) peut être fixée sur le véhicule (2) via une unité de console (7) et l'unité de console (7) présente un mécanisme de réglage (8), avec lequel l'unité d'enveloppe (6) peut être fixée sur l'unité de console (7) dans des positions différentes l'une de l'autre, dans lequel le mécanisme de réglage (8) présente un mécanisme de serrage (11), avec lequel l'unité d'enveloppe (6) peut être serrée sur l'unité de console (7) dans des positions différentes l'une de l'autre, **caractérisé en ce que** le dispositif de génération (5) est agencé pour l'au moins un signal haptique directement sur l'unité d'enveloppe (6) ou sur une languette (26) de l'unité d'enveloppe (6).

2. Système de direction (1) selon la revendication 1, **caractérisé en ce que** le mécanisme de réglage (8) permet un réglage de la position de l'unité d'enveloppe (6) dans une direction longitudinale (9) de la colonne de direction (4) et/ou dans une direction verticale (10) par rapport à une position de montage du système de direction (1) dans le véhicule (2).

3. Système de direction (1) selon la revendication 1 ou 2, **caractérisé en ce que** l'unité d'enveloppe (6) entoure au moins par zone une cavité en forme de tunnel ou de tuyau et la colonne de direction (4) passe par cette cavité.

4. Système de direction (1) selon l'une quelconque des revendications 1 à 3, **caractérisé en ce qu'**au moins un, de préférence au moins deux, palier(s) (14) est (sont) agencé(s) au niveau ou dans l'unité d'enveloppe (6), dans lequel la colonne de direction (4) est logée dans l'unité d'enveloppe (6) au moyen du palier (14) ou des paliers (14).

5. Système de direction (1) selon l'une quelconque des revendications 1 à 4, **caractérisé en ce que** le dispositif de génération (5) pour l'au moins un signal haptique présente un vibrateur pour la génération de vibrations mécaniques ou de signaux de cliquetis.

6. Système de direction (1) selon l'une quelconque des revendications 1 à 5, **caractérisé en ce que** l'unité d'enveloppe (6) présente une fréquence de résonance, qui concorde avec une fréquence du signal haptique pouvant être généré par le dispositif de génération (5) ou est au moins aussi proche de la fréquence du signal haptique que l'unité d'enveloppe (6) peut être mise en résonance.

7. Procédé de fonctionnement d'un système de direction (1) pour un véhicule (2) selon l'une quelconque des revendications 1 à 6, **caractérisé en ce qu'**au moins un signal haptique est généré par le dispositif de génération (5) et ce signal haptique est transmis du dispositif de génération (5) à la colonne de direction (4) via l'unité d'enveloppe (6).
